# EUROPEAN PATENT APPLICATION

(11) **EP 4 350 384 A1**
(43) Date of publication of application: **10.04.2024**
(21) Application number: 22199513.7
(22) Date of filing: 04.10.2022
(51) Int. Cl.: G01S 7/40, G01S 13/72, G01S 13/931, G01S 7/41

(54) **RADAR-BASED SYSTEM IN A VEHICLE AND METHOD FOR DRIVER ASSISTANCE OR AUTOMATED DRIVING**

(71) Applicant: Robert Bosch GmbH, 70442 Stuttgart (DE)
(72) Inventor: Horvath, Attila, 9700 Szombathely (HU); Gyimesi, Gabor, Budapest (HU)

(57) **Abstract**

The invention relates to a radar-based system (10) in a vehicle (1) for driver assistance or automated driving, comprising a processor configured to: receive signals from a sensor (3) of the vehicle (1) configured to detect objects outside the vehicle, calculate a first vertical misalignment angle of the sensor (3) using a digital signal processing algorithm (4) based on the received signals, calculate a second vertical misalignment angle of the sensor (3) using an object hypothesis algorithm (6) based on the received signals, merge the first vertical misalignment angle and the second vertical misalignment angle to generate a merged vertical misalignment angle, determine whether the merged vertical misalignment angle is outside a predefined operating range of the sensor, wherein the processor is further configured to weight a detected object based on a distance of the object to the vehicle (1) and an angle of the object to the vehicle (1), using the digital signal processing algorithm (4).

## Description

The present invention relates to a radar-based system in a vehicle for driver assistance or automated driving, a computer-implemented method for driver assistance or automated driving for a vehicle, and a computer program comprising instructions which, when the program is executed by a computer, cause the computer to carry out the method.

### Description of the Prior Art

An automotive radar does not always point exactly forward, which can cause errors in the perceived locations of real world objects. For instance, a 3° horizontal misalignment error causes an object which is 50 m away from the ego vehicle to have an error of more than 2.5 m in its lateral position.

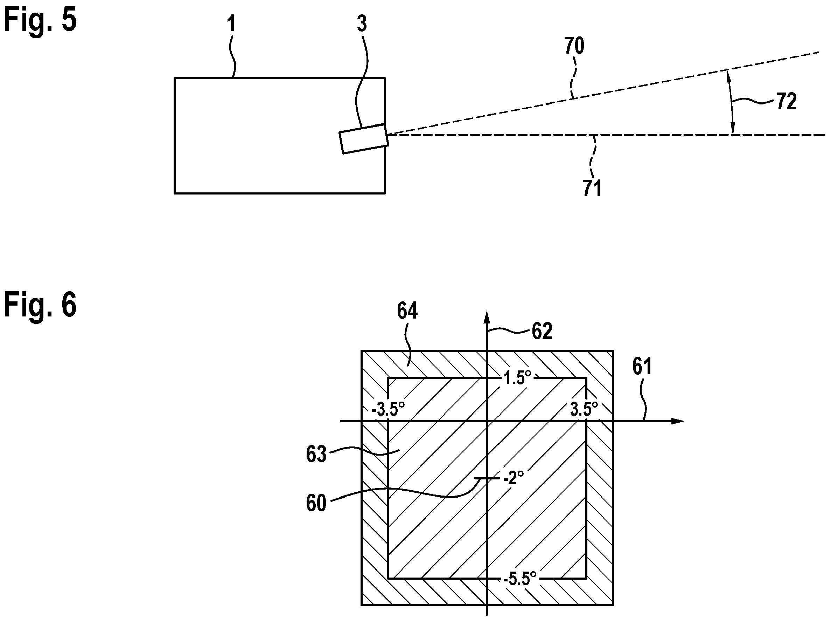

Misalignment algorithms, MALs, are used to recognize the occurrence of angle misalignment, and at the same time estimate the difference between the ego vehicle axis and the radar axis. In Fig. 5 which schematically shows an ego vehicle 1 comprising a front-center radar 3, a misalignment algorithm can estimate the horizontal misalignment angle 72 between the horizontal axis 71 of the ego vehicle 1 and the horizontal axis 70 of the radar 3. If the misalignment angles are determined, locations and angles can be compensated.

An automotive radar has limits of handling misalignment angles. If the estimated misalignment angle moves outside these limits, a MAL outputs signals "out-of-spec" to the radar-based system in the vehicle, and consequently, the system enters a shut-off state. All radar functions are turned off.

Originally, all radars were physically adjusted, for instance by a service personnel, to be in nominal position. Around this position, there are maximum limits of operation. Fig. 6 schematically shows the limits of operation of an automotive radar which is a downward pointing radar, wherein the nominal position 60 of the radar in this example points 2° downwards. Around the nominal position 60, there is the +/-3.5° normal operating area 63. Around the operating area 63, there is the +/-1° degradation area 64 which handles the error of horizontal misalignment signals in the horizontal axis 61 and vertical misalignment signals in the vertical axis 62. Performance is degraded in degradation area 64, but there is no shut-off. Shut-off occurs if a misalignment angle is outside the degradation area 64, for either azimuth or elevation.

Vertical misalignment algorithms, VMALs, provide a compensation value for vertical misalignment during normal operation of a vehicle. They also output an error signal if the misalignment angle is outside the operation area of the radar.

Conventionally, there are two different types of algorithms used for calculating the vertical misalignment, namely, an object hypothesis, OHY, algorithm and a digital signal processing, DSP, algorithm. If a DSP algorithm has a plausibility which is high enough, the two results outputted by the two algorithms are merged with equal weights, otherwise only the result from the OHY algorithm is used. Normally, these algorithms work at standstill of an ego vehicle, in particular during reflashing electronic control units and/or during driving of the ego vehicle.

In some cases of severe vertical physical misalignment (for instance, >5° absolute in the example shown in Fig. 6), the radar cannot detect enough objects for the misalignment algorithms to work, which means that a shut-off cannot happen. This is called the "vertical misalignment blindness". A current solution to this issue is to monitor the DSP elevation misalignment plausibility: If it stays low (at zero) for a long period of time, for instance 45-60 minutes, the "vertical misalignment blindness" is indicated.

However, in a scarce environment (e.g. with a test track, on an empty road), the VMAL blindness function switches off the driver assistance system even if the radar misalignment is within the operation range. Besides, occasionally, during the working of the algorithms at standstill of an ego vehicle, the VMAL blindness function also switches off the driver assistance system.

US 9,366,751 B2 discloses a method for ascertaining and compensating for a misalignment angle of a radar sensor of a vehicle, includes generating a first set of data which contains information about a measured alignment of the radar sensor with respect to an instantaneous movement of the vehicle; generating a second set of data which contains information about a measured alignment of the reference axes defined at the vehicle with respect to the instantaneous movement of the vehicle; ascertaining a misalignment angle by comparing the generated first set of data to the generated second set of data; compensating for the ascertained misalignment angle by changing an emission direction of the main lobe of the antenna characteristic as a function of the ascertained misalignment angle.

### Disclosure of the Invention

The present invention provides a radar-based system in a vehicle for driver assistance or automated driving according to claim 1, a computer-implemented method for driver assistance or automated driving for a vehicle according to claim 7 and a computer program according to claim 10.

Further advantageous embodiments and improvements of the invention are listed in the dependent claims.

### Advantages of the Invention

The invention provides, according to a first aspect, a radar-based system in a vehicle for driver assistance or automated driving, comprising a processor configured to: receive signals from a sensor of the vehicle configured to detect objects outside the vehicle, calculate a first vertical misalignment angle of the sensor using a digital signal processing algorithm based on the received signals, calculate a second vertical misalignment angle of the sensor using an object hypothesis algorithm based on the received signals, merge the first vertical misalignment angle and the second vertical misalignment angle to generate a merged vertical misalignment angle, determine whether the merged vertical misalignment angle is outside a predefined operating range of the sensor, wherein the processor is further configured to weight a detected object based on a distance of the object to the vehicle and an angle of the object to the vehicle, using the digital signal processing algorithm.

It is favorable that by means of the inventive radar-based system, the time of a true detection that the vertical misalignment is out of range can be significantly reduced. This leads to an improvement of the recovery time after the vertical misalignment is out of range.

In addition, the angle measurement capability of a conventional VMAL is increased, in particular to the extent of the hardware limitation possibilities of the automotive radar. With the novel VMAL provided by the present invention, the angle measurement capability of a vertical misalignment can be extended to approximately nominal +/-10°.

Besides, the new VMAL does not learn or work during standstill of an ego vehicle. In this regard, a false positive detection that "vertical misalignment is out of range" and an inappropriate activation of the VMAL blindness function during standstill of the vehicle can be eliminated.

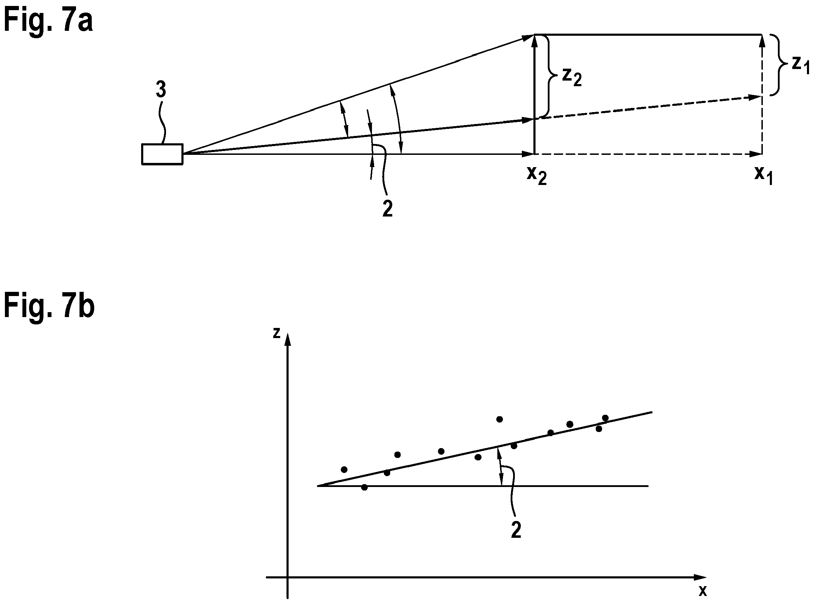

In the OHY algorithm of the present invention, the misalignment from an apparent change in the height of objects is calculated, when measured at different distances. In Fig. 7a, the vertical misalignment angle is denoted by reference sign 2. Z₁ and Z₂ are the different apparent object heights at different distances.

Each object is measured multiple times. In a distance-height coordinate system according to Fig. 7b, a straight line is fitted to the measured data points, and the gradient of this line equals the misalignment. The misalignment values calculated from different objects are filtered to allow for the angle output.

In the DSP algorithm of the present invention, calculation is based on the principle, that the highest number of reflections can be seen at the sensor height. If a histogram is built out of all the elevation angles seen, the angle of misalignment can be calculated simply by checking where or at which angle the peak of the histogram is. The angle provided by the DSP algorithm is an absolute angle, not relative to nominal position.

In a preferable embodiment, the processor is further configured to weight the detected object based on a quality of the object, using the digital signal processing algorithm.

In a further preferable embodiment, the processor is further configured to weight the detected object based on a speed of the vehicle, using the digital signal processing algorithm.

In a further preferable embodiment, the processor is further configured to weight the detected object based on a road slope, using the digital signal processing algorithm.

In a further preferable embodiment, the processor is further configured to determine whether the environment in which the vehicle is located is suitable for a calculation of a vertical misalignment angle of the sensor, based on a radar signature of the object and a moving state of the object, using the object hypothesis algorithm.

In a further preferable embodiment the processor is further configured to determine whether an angle measurement is possible, based on statistics of maximum measured object distances in a predefined elevation angle range.

The invention further provides, according to a second aspect, a computer-implemented method for driver assistance or automated driving for a vehicle comprising a radar-based system, comprising the steps of: receiving signals from a sensor of the vehicle configured to detect objects outside the vehicle, calculating a first vertical misalignment angle of the sensor using a digital signal processing algorithm based on the received signals, calculating a second vertical misalignment angle of the sensor using an object hypothesis algorithm based on the received signals, merging the first vertical misalignment angle and the second vertical misalignment angle to generate a merged vertical misalignment angle, determining whether the merged vertical misalignment angle is outside a predefined operating range of the sensor, wherein the method further comprises weighting a detected object based on a distance of the object to the vehicle and an angle of the object to the vehicle, using the digital signal processing algorithm.

In a preferable embodiment of the computer-implemented method, the method further comprises weighting the detected object based on a quality of the object and/or a speed of the vehicle and/or a road slope, using the digital signal processing algorithm.

In a further preferable embodiment of the computer-implemented method, the method further comprises determining whether the environment in which the vehicle is located is suitable for a calculation of a vertical misalignment angle of the sensor, based on a radar signature of the object and a moving state of the object, using the object hypothesis algorithm.

The invention further provides, according to a third aspect, a computer program comprising instructions which, when the program is executed by a computer, cause the computer to carry out the method according to the second aspect of the invention.

### Brief Description of the Drawings

Further advantageous details and features may be taken from the following description of several exemplary embodiments of the invention in conjunction with the drawings, in which:
- Fig. 1: shows a simplified flow chart of the VMAL of an embodiment of the inventive radar-based system;
- Fig. 2: shows a simplified flow chart of a conventional VMAL used in a radar-based system;
- Fig. 3: shows a simplified flow chart of the VMAL of the embodiment of the inventive radar-based system according to Fig. 1, for out of spec/range detection;
- Fig. 4: shows a simplified flow chart of the conventional VMAL used in a radar-based system according to Fig. 2, for out of spec/range detection;
- Fig. 5: schematically shows an ego vehicle comprising a radar sensor with horizontal angle misalignment;
- Fig. 6: schematically shows the limits of operation of an automotive radar;
- Fig. 7a: schematically shows a step of the OHY algorithm of the present invention;
- Fig. 7b: schematically shows another step of the OHY algorithm of the present invention;
- Fig. 8: shows a diagram of different signal values using the algorithms of the present invention without an environment indicator;
- Fig. 9: shows a diagram of different signal values using the algorithms of the present invention with an environment indicator;
- Fig. 10: schematically shows an ego vehicle comprising an embodiment of a radar-based system of the present invention;
- Fig. 11: shows a block diagram of an embodiment of the computer-implemented method of the present invention; and
- Fig. 12: shows a block diagram of an embodiment of the inventive computer program comprising instructions which, when the program is executed by a computer, cause the computer to carry out the embodiment of the inventive method according to Fig. 11.

### Embodiments of the Invention

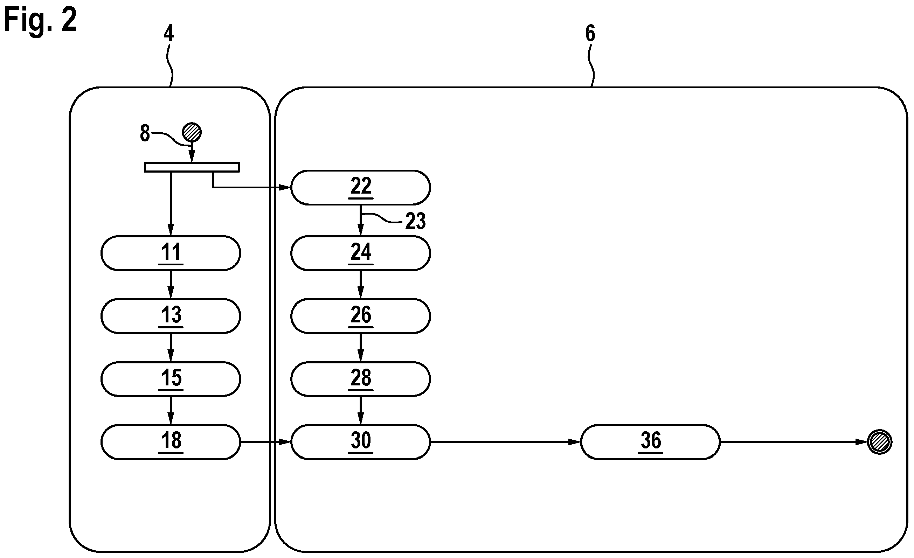

Fig. 2 shows a simplified flow chart of a conventional VMAL used in a radar-based system. The shown VMAL comprises a DSP component 4 and an OHY component 6. In the DSP component 4, locations 8 of objects or targets detected by a radar sensor are inputted to the step 11 of filtering these locations. After step 11, the filtered locations are used to build a VMAL histogram in step 13. In step 15, the values in the VMAL histogram are filtered using an infinite impulse response, IIR, filter. Afterwards, the filtered values are used to calculate a first vertical misalignment angle of the sensor in step 18.

In the OHY component 6, the locations 8 of objects or targets are used to generate objects in step 22. In step 24, the generated objects 23 are used to build a VMAL histogram. In step 26, the values in the VMAL histogram are filtered using an infinite impulse response, IIR, filter. Afterwards, the filtered values are used to calculate a second vertical misalignment angle of the sensor in step 28.

In step 30, the first and second vertical misalignment angles of the sensor are merged. The merged vertical misalignment angle of the sensor is saved/stored in step 36 for further processing.

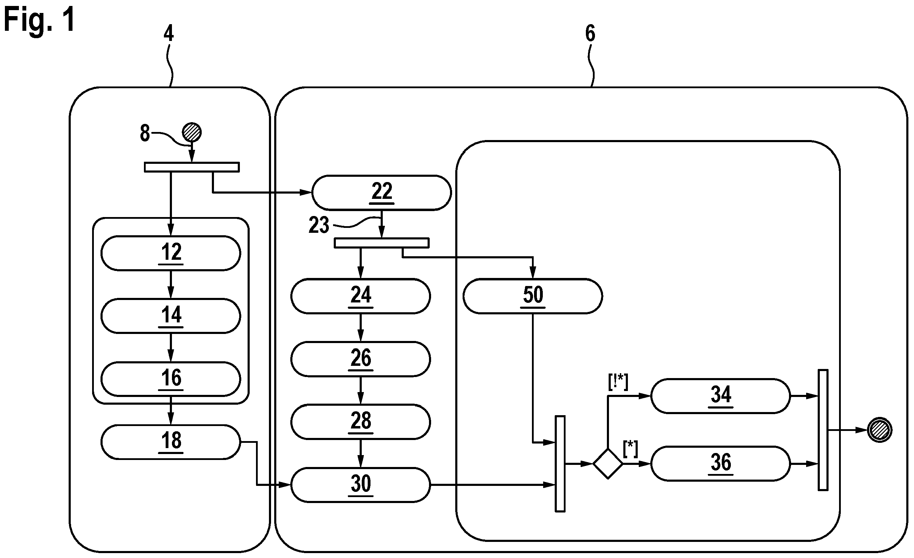

Fig. 1 shows a simplified flow chart of the VMAL of an embodiment of the inventive radar-based system. Compared with the conventional VMAL mentioned above, the inventive VMAL also comprises a DSP component 4 and an OHY component 6. The steps 18, 22, 24, 26, 28 and 30 are the same as the conventional VMAL shown in Fig. 2.

In step 12, instead of merely filtering the locations 8 in the conventional VMAL, these locations 8 or the objects corresponding to these locations 8 are weighed in the present invention. First, each object or each corresponding location is weighed based on a distance of the object to the vehicle and an angle of the object to the vehicle: The measured location is checked for validity. Parameter t_locValid_ul indicating whether the location was valid or not is set to 5 if all the 5 criteria for the validity of the location is fulfilled, which are the following:
- The location is measured,
- The elevation angle of the location is valid,
- The radial distance to the location is greater than 10 m,
- The azimuth angle of the location is greater than - 10 degrees, and
- The azimuth angle of the location is lower than +10 degrees.

In addition, the location is further weighted based on a quality of the object. Parameter t_qualityValid_b which indicates whether the quality of the location is valid or not and which can take only the value of TRUE or FALSE, is set to TRUE if the angular error probability parameter of the location (represented by "wProbDH0Ang_ub") is lower than 0.5. Parameter t_quality_ub which indicates the quality of the location and which is calculated from the angular error probability of the location (represented by wProbDH0Ang_ub) is normalized between 1 and 5, wherein 1 means average quality (when wProbDH0Ang_ub = 4-4.9) and 5 means the highest quality (when wProbDH0Ang_ub = 0).

If parameter t_locValid_ul which indicates if the location is valid or not is 5 (which is the best value and means that the location is valid, whereas a value other than 5 means that the location is not valid) and the t_qualityValid_b is TRUE, then the weight of the location is 2 times the t_quality_ub. Otherwise, if t_qualityValid_b is TRUE, then the weight of the location is the t_quality_ub. Otherwise, the weight of the location is one.

In step 14, the output of the built VMAL histogram is modified compared with step 13 of the conventional approach. The lower and upper thresholds of the conventional VMAL histogram are interpolated such that the value range is expanded.

In step 16, the IIR filter of the conventional VMAL is updated by further weighting each object or each location based on a speed of the ego vehicle and a road slope. Reference speed (represented by "vxvref_f") based weight calculation of the new value of the filter is adopted: If vxvref_f < 4 m/s, then the weight shall be calculated as follows: absolute value of the vxvref_f diveded by 12 m/s. Else, if vxvref_f > 16 m/s, then the weight shall be 1.5. Otherwise, the weight is 1. Road slope based weight calculation of the new value of the filter is adopted: If the road slope is greater than 1 m/s^2, then the weight shall be halved.

In the novel VMAL of the present invention, an environment indicator 50 (represented by "Calculate suitableEnvlnd") is introduced. The purpose of this indicator is to detect whether the environment where the ego vehicle currently is located is suitable for vertical alignment angle calculation, or not. When the ego vehicle is in a scarce environment where there are no or very few objects located at the sensor height, all or almost all of the objects are only on the ground, a VMAL without this indicator learns downwards and produces a false out-of-range-detection.

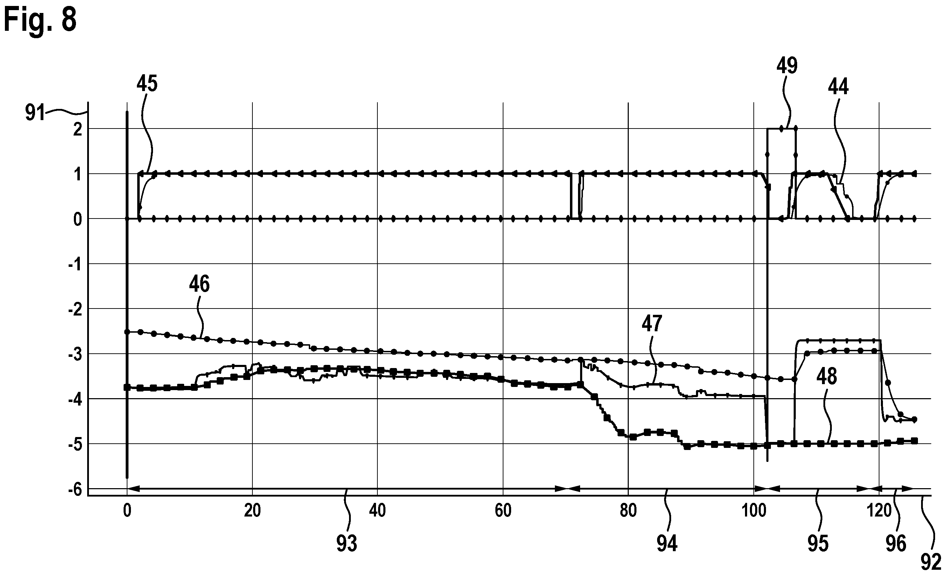

Fig. 8 shows an example of this false out-of-range-detection. The horizontal axis 92 of the diagram is time in minutes, and the vertical axis 91 is signal values. Curve 44 represents the plausibility value of the merged vertical misalignment angle, relative to the nominal position. Curve 45 represents the quality criterion of elevation misalignment angle estimation. Curve 47 represents the estimation of the sensor misalignment in elevation direction which is the merged vertical misalignment angle. It can be considered as a "fast" signal which is used to quickly detect whether the sensor misalignment is outside the limits of operation and to detect large changes in misalignment. Curve 46 represents the estimation of the sensor misalignment in elevation direction. It can be considered as a "slow" signal which is a low pass filtered version of the fast signal corresponding to curve 47 and used for compensating the misalignment angle.

Curve 48 represents the calculated vertical misalignment angle by the OHY component 6.

Curve 49 shows whether the VMAL is out of range or in range compared to the normal operation area.

In the time span 93, the ego vehicle is driven in the environment of city, motorway and country road. In the time span 94, the ego vehicle is on a test track and is driven in an environment without any target/object. In the time span 95, the test track is driven in an environment with one car as the target/object. In the time span 96, the ego vehicle is driven on a country road.

It can be seen from Fig. 8 that in the time span 94 which lasts more than 30 minutes, there is no target in the driving environment of the ego vehicle. At the end of the time span 94, referring to curve 49, a VMAL outputs a false detection that the vertical misalignment angle is out of range because there are no or very few locations or objects at sensor height, all or almost all of the objects are only on the ground and the conventional VMAL without the environment indicator learns downwards and produces a false out-of-range-detection.

The value of the environment indicator 50 is determined based on a radar signature of the object and a moving state of the object. A function uses the radar cross section, RCS, of the targets/objects and the moving state of the objects to calculate the "suitableEnvlnd_f" signal which indicates whether the environment is suitable for the vertical misalignment detection of the radar or not in the following way: Loop over all OHY objects, get the value of the RCS parameter (represented by the parameter "dBPowerFilt_uw") of each object. If it is over 115, then add 1 to suitableEnvInd_f, then get the value of the object moving probability (represented by the parameter "prob1Moving_ub") for each object and add it to the suitableEnvInd_f. Then maximize the value of the suitableEnvInd_f parameter in the following way: If the value of the suitableEnvInd_f parameter is over the 12 limit, then its value shall be 12. If the value of the suitableEnvInd_f parameter is below or equal to 1.5, the vertical misalignment angle is not updated.

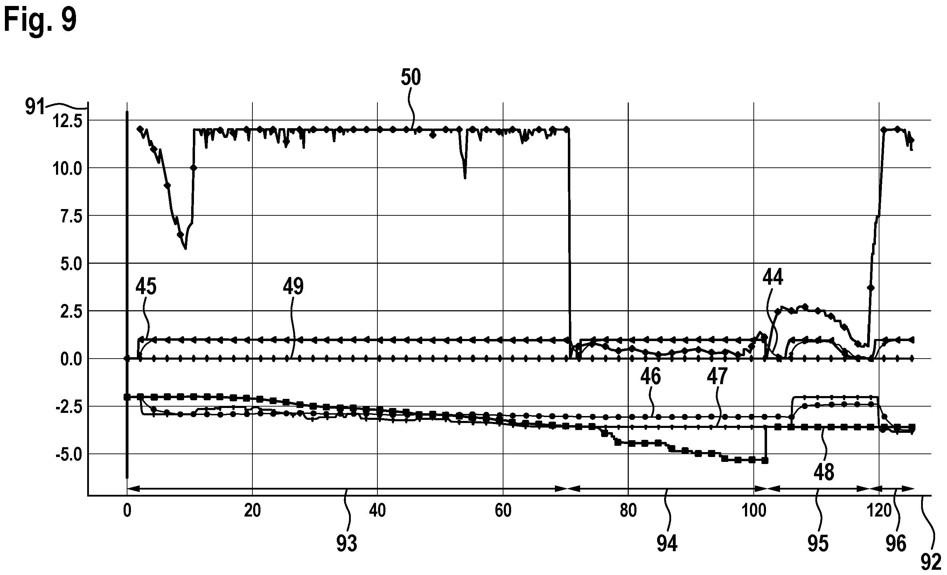

The problem shown in Fig. 8 is solved with the implemented novel environment indicator 50 shown in Fig. 9. It is clear therefrom that the environment indicator 50 stays at a low value from the beginning of the time span 94, and no false out-of-spec-event occurs this time (see the essentially flat line 49 of Fig. 9).

In step 34 shown in Fig. 1, based on the calculated "suitableEnvlnd_f" signal, it is decided not to save the merged vertical misalignment angle, whereas in step 36, it is decided to save the merged vertical misalignment angle.

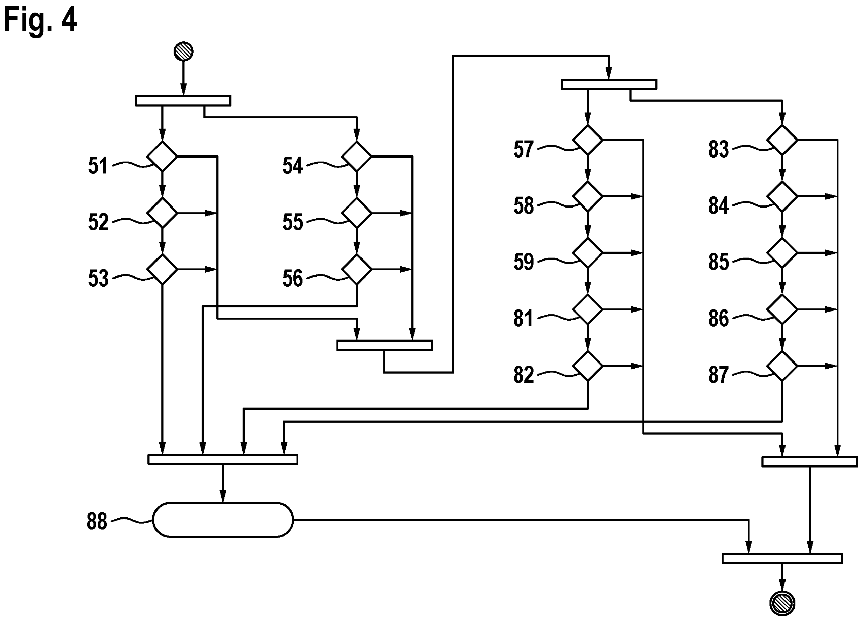

Fig. 4 shows a simplified flow chart of the conventional VMAL used in a radar-based system according to Fig. 2, for out of spec/range detection. In step 51, it is determined whether the calculated VMAL angle by the OHY component represented by curve 48 is more than a high limit 3°. In step 52, it is determined whether the calculated vertical misalignment angle by the DSP component is more than a high limit 3°. In step 53, it is determined whether the quality criterion of elevation misalignment angle estimation represented by curve 45 is more than a limit of 0.95. In step 54, it is determined whether the calculated VMAL angle by the OHY component represented by curve 48 is less than a low limit -3°. In step 55, it is determined whether the calculated vertical misalignment angle by the DSP component is less than a low limit -3°. In step 56, it is determined whether the quality criterion of elevation misalignment angle estimation represented by curve 45 is more than a limit of 0.95. In step 57, it is determined whether the plausibility value of the merged vertical misalignment angle represented by curve 44 is more than a limit 0.2. In step 58, it is determined whether the filtered version of the DSP vertical misalignment angle is more than a high limit 3°. In step 59, it is determined whether the filtered version of the quality criterion of elevation misalignment angle estimation represented by curve 45 is more than a limit of 0.95. In step 81, it is determined whether the calculated vertical misalignment angle by the DSP component is more than a high limit 3°. In step 82, it is determined whether the quality criterion of elevation misalignment angle estimation represented by curve 45 is more than a limit of 0.95. In step 83, it is determined whether the plausibility value of the merged vertical misalignment angle represented by curve 44 is more than a limit 0.2. In step 84, it is determined whether the filtered version of the DSP vertical misalignment angle is more than a high limit 3°. In step 85, it is determined whether the filtered version of the quality criterion of elevation misalignment angle estimation represented by curve 45 is more than a limit of 0.95. In step 86, it is determined whether the calculated vertical misalignment angle by the DSP component is more than a high limit 3°. In step 87, it is determined whether the quality criterion of elevation misalignment angle estimation represented by curve 45 is more than a limit of 0.95. In step 88, the merged vertical misalignment angle is set to be out of spec/range.

It is clear from Fig. 4 that the conventional VMAL involves a considerably large amount of steps for out of spec/range detection. Thus, the processing speed is considerably low.

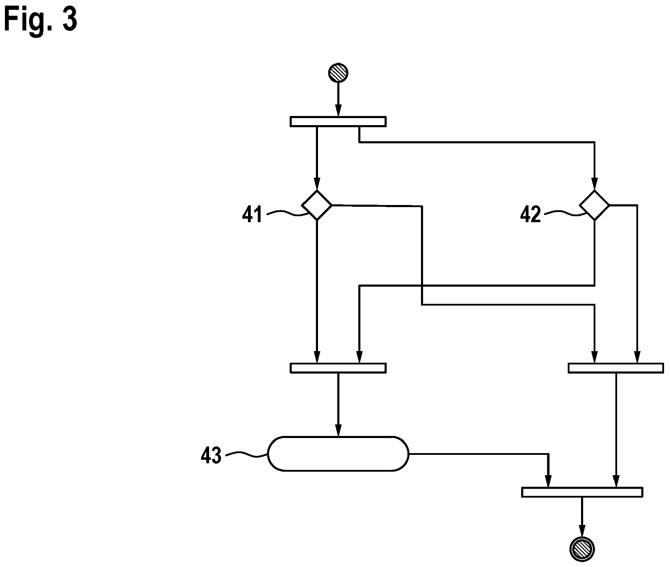

In the present invention, as shown in Fig. 3, there are only three steps involved for out of spec/range detection, thus being much faster than the conventional VMAL. In step 41, it is determined whether the fast signal/value - the stored merged vertical misalignment angle represented by curve 47 - is more than a high limit of 3°. In step 42, it is determined whether the fast signal/value - the stored merged vertical misalignment angle represented by curve 47 - is less than a lower limit of -3°. In step 43, the merged vertical misalignment angle is set to be out of spec/range.

Thereby, the time of a true detection that the vertical misalignment is out of range can be significantly reduced, in particular to approximately 11 minutes on average, in order to better align with ignition cycles in a common usage. More importantly, a crucial reason for the time reduction of the true out of range detection is that more data are involved in the method of the present invention, Instead of filtering data in conventional approaches, the data are kept and weighted in the present invention.

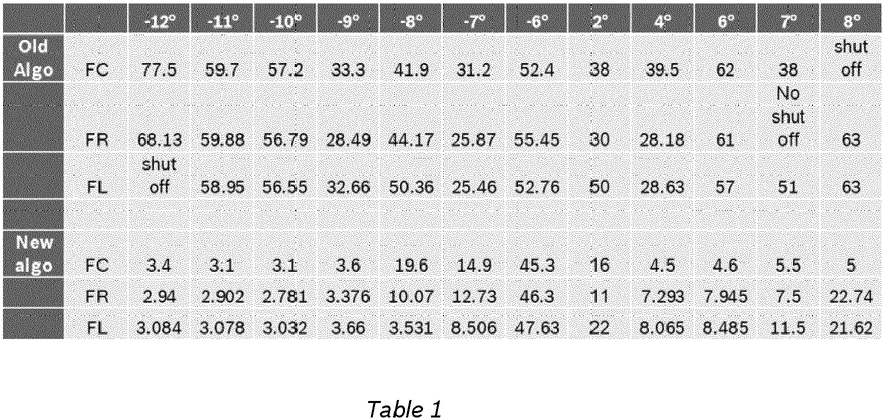

Table 1 above shows the huge difference of time spent for an out-of-range-detection between the conventional/old VMAL and the novel VMAL of the present application, Measurements were recorded with 3 radars, wherein "FC", "FL", "FR" stands for Front Centre, Front Left, Front Right, respectively. In the title row of Table 1, the vertical misalignment values are absolute values. In the data rows, the time until shut off is expressed in minutes.

In an embodiment now shown, in order to detect a severe (less than -10°) sensor tilt where angle measurement is not possible or unindicated faulty elevation angles may be reported, a new indicator based on maximum measured object distance statistics for objects measure in the elevation angle range between -1° and +1° is implemented.

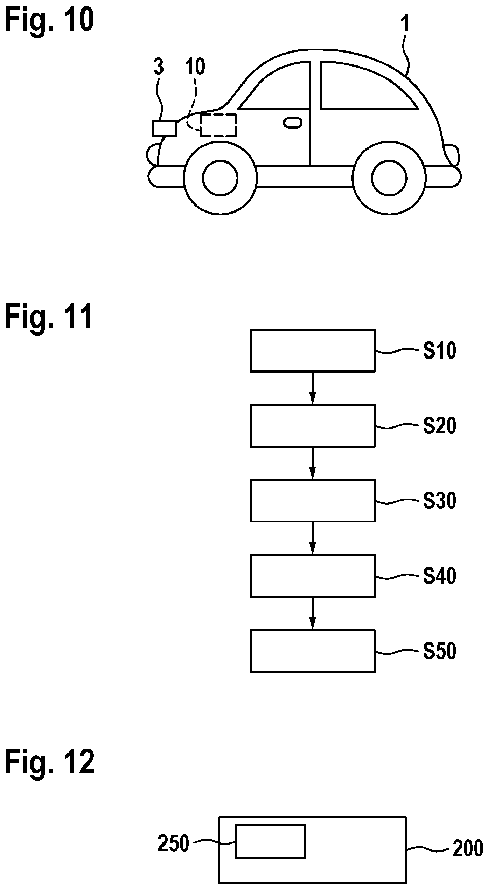

Fig. 10 schematically shows an ego vehicle 1 comprising a radar sensor 3 and a radar-based system 10 for driver assistance or automated driving of the present invention. The system 10 comprises a processor configured to: receive signals from a sensor of the vehicle configured to detect objects outside the vehicle, calculate a first vertical misalignment angle of the sensor using a digital signal processing algorithm based on the received signals, calculate a second vertical misalignment angle of the sensor using an object hypothesis algorithm based on the received signals, merge the first vertical misalignment angle and the second vertical misalignment angle to generate a merged vertical misalignment angle, determine whether the merged vertical misalignment angle is outside a predefined operating range of the sensor, wherein the processor is further configured to weight a detected object based on a distance of the object to the vehicle and an angle of the object to the vehicle, using the digital signal processing algorithm.

The embodiment of the inventive computer-implemented method for driver assistance or automated driving for a vehicle comprising a radar-based system shown in Fig. 11 comprises steps S10, S20, S30, S40, and S50. In the step S10, signals from a sensor of the vehicle configured to detect objects outside the vehicle are received. In the step S20, a first vertical misalignment angle of the sensor is calculated using a digital signal processing algorithm based on the received signals. In the step S30, a second vertical misalignment angle of the sensor is calculated using an object hypothesis algorithm based on the received signals. In the step S40, the first vertical misalignment angle and the second vertical misalignment angle are merged to generate a merged vertical misalignment angle. In the step S50, it is determined whether the merged vertical misalignment angle is outside a predefined operating range of the sensor. In the step S20, a detected object is further weighted based on a distance of the object to the vehicle and an angle of the object to the vehicle, using the digital signal processing algorithm.

The embodiment of the inventive computer program 200 shown in Fig. 12 comprises instructions 250 which, when the program 200 is executed by a computer, cause the computer to carry out the embodiment of the inventive method shown in Fig. 11.

The invention is described and illustrated in detail by the preferable embodiments mentioned above. However, the invention is not limited by the disclosed examples, and other variations can be derived therefrom while still being inside the protection scope of the invention.

## Claims

1. Radar-based system (10) in a vehicle (1) for driver assistance or automated driving, comprising a processor configured to:
receive signals from a sensor (3) of the vehicle (1) configured to detect objects outside the vehicle,
calculate a first vertical misalignment angle of the sensor (3) using a digital signal processing algorithm (4) based on the received signals,
calculate a second vertical misalignment angle of the sensor (3) using an object hypothesis algorithm (6) based on the received signals,
merge the first vertical misalignment angle and the second vertical misalignment angle to generate a merged vertical misalignment angle,
determine whether the merged vertical misalignment angle is outside a predefined operating range of the sensor,
wherein the processor is further configured to weight a detected object based on a distance of the object to the vehicle (1) and an angle of the object to the vehicle (1), using the digital signal processing algorithm (4).

2. Radar-based system (10) according to claim 1, wherein the processor is further configured to weight the detected object based on a quality of the object, using the digital signal processing algorithm (4).

3. Radar-based system (10) according to claim 1 or 2, wherein the processor is further configured to weight the detected object based on a speed of the vehicle (1), using the digital signal processing algorithm (4).

4. Radar-based system (10) according to any of the preceding claims, wherein the processor is further configured to weight the detected object based on a road slope, using the digital signal processing algorithm (4).

5. Radar-based system (10) according to any of the preceding claims, wherein the processor is further configured to determine whether the environment in which the vehicle (1) is located is suitable for a calculation of a vertical misalignment angle of the sensor, based on a radar signature of the object and a moving state of the object, using the object hypothesis algorithm (6).

6. Radar-based system (10) according to any of the preceding claims, wherein the processor is further configured to determine whether an angle measurement is possible, based on statistics of maximum measured object distances in a predefined elevation angle range.

7. Computer-implemented method for driver assistance or automated driving for a vehicle comprising a radar-based system, comprising the steps of:
receiving (S10) signals from a sensor of the vehicle configured to detect objects outside the vehicle,
calculating (S20) a first vertical misalignment angle of the sensor using a digital signal processing algorithm based on the received signals,
calculating (S30) a second vertical misalignment angle of the sensor using an object hypothesis algorithm based on the received signals,
merging (S40) the first vertical misalignment angle and the second vertical misalignment angle to generate a merged vertical misalignment angle,
determining (S50) whether the merged vertical misalignment angle is outside a predefined operating range of the sensor,
wherein the method further comprises weighting a detected object based on a distance of the object to the vehicle and an angle of the object to the vehicle,
using the digital signal processing algorithm.

8. Computer-implemented method according to claim 7, wherein the method further comprises weighting the detected object based on a quality of the object and/or a speed of the vehicle and/or a road slope, using the digital signal processing algorithm.

9. Computer-implemented method according to claim 7 or 8, wherein the method further comprises determining whether the environment in which the vehicle is located is suitable for a calculation of a vertical misalignment angle of the sensor, based on a radar signature of the object and a moving state of the object, using the object hypothesis algorithm.

10. Computer program (200) comprising instructions (250) which, when the program (200) is executed by a computer, cause the computer to carry out the method of any of the claims 7 to 9.

## Amended claims

### Amended claims in accordance with Rule 137(2) EPC.

1. Radar-based system (10) in a vehicle (1) for driver assistance or automated driving, comprising a processor configured to:
receive signals from a sensor (3) of the vehicle (1) configured to detect objects outside the vehicle,
calculate a first vertical misalignment angle of the sensor (3) using a digital signal processing algorithm (4) based on the received signals,
calculate a second vertical misalignment angle of the sensor (3) using an object hypothesis algorithm (6) based on the received signals,
merge the first vertical misalignment angle and the second vertical misalignment angle to generate a merged vertical misalignment angle,
determine whether the merged vertical misalignment angle is outside a predefined operating range of the sensor (3),
wherein the processor is further configured to weight a detected object based on a distance of the object to the vehicle (1) and an angle of the object to the vehicle (1), using the digital signal processing algorithm (4), in order to determine whether a location (8) of the detected object is valid or not.

2. Radar-based system (10) according to claim 1, wherein the processor is further configured to weight the detected object based on a quality of the object indicating an angular error probability of the location (8) of the detected object, using the digital signal processing algorithm (4).

3. Radar-based system (10) according to claim 1 or 2, wherein the processor is further configured to weight the detected object based on a speed of the vehicle (1), using the digital signal processing algorithm (4).

4. Radar-based system (10) according to any of the preceding claims, wherein the processor is further configured to weight the detected object based on a road slope, using the digital signal processing algorithm (4).

5. Radar-based system (10) according to any of the preceding claims, wherein the processor is further configured to determine whether the environment in which the vehicle (1) is located is suitable for a calculation of a vertical misalignment angle of the sensor (3), based on a radar signature of the object and a moving state of the object, using the object hypothesis algorithm (6).

6. Radar-based system (10) according to any of the preceding claims, wherein the processor is further configured to determine whether an angle measurement is possible, based on statistics of maximum measured object distances in a predefined elevation angle range.

7. Computer-implemented method for driver assistance or automated driving for a vehicle (1) comprising a radar-based system (10), comprising the steps of:
receiving (S10) signals from a sensor (3) of the vehicle (1) configured to detect objects outside the vehicle (1),
calculating (S20) a first vertical misalignment angle of the sensor (3) using a digital signal processing algorithm (4) based on the received signals,
calculating (S30) a second vertical misalignment angle of the sensor (3) using an object hypothesis algorithm (6) based on the received signals,
merging (S40) the first vertical misalignment angle and the second vertical misalignment angle to generate a merged vertical misalignment angle,
determining (S50) whether the merged vertical misalignment angle is outside a predefined operating range of the sensor (3),
wherein the method further comprises weighting a detected object based on a distance of the object to the vehicle (1) and an angle of the object to the vehicle (1), using the digital signal processing algorithm (4), in order to determine whether a location (8) of the detected object is valid or not.

8. Computer-implemented method according to claim 7, wherein the method further comprises weighting the detected object based on a quality of the object indicating an angular error probability of the location (8) of the detected object and/or a speed of the vehicle (1) and/or a road slope, using the digital signal processing algorithm (4).

9. Computer-implemented method according to claim 7 or 8, wherein the method further comprises determining whether the environment in which the vehicle (1) is located is suitable for a calculation of a vertical misalignment angle of the sensor (3), based on a radar signature of the object and a moving state of the object, using the object hypothesis algorithm (6).

10. Computer program (200) comprising instructions (250) which, when the program (200) is executed by a computer, cause the computer to carry out the method of any of the claims 7 to 9.
